# EUROPEAN PATENT APPLICATION

(11) **EP 1 303 117 A1**
(43) Date of publication of application: **16.04.2003**
(21) Application number: 02251838.5
(22) Date of filing: 14.03.2002
(51) Int. Cl.: H04M 3/493, G07B 15/02, G01C 21/00

(54) **Method and system for taking out insurance policy, server and terminal**

(30) Priority: 10.10.2001 JP 2001312283; 15.10.2001 JP 2001316995; 15.10.2001 JP 2001316996
(71) Applicant: Increment P Corporation, Tokyo-to (JP); Kawakami, Shuji, Asaka-shi, Saitama-ken (JP); Shoji, Nobuhiro, Tokyo-to (JP)
(72) Inventor: Nozaki, Takashi, C/o Increment P Corporation, Meguro-ku, Tokyo-to (JP); Ogawa, Kazuya, C/o Increment P Corporation, Meguro-ku, Tokyo-to (JP); Takenaga, Takashi, C/o Increment P Corporation, Meguro-ku, Tokyo-to (JP); Nonomura, Tadao, C/o Increment P Corporation, Meguro-ku, Tokyo-to (JP); Amano, Koji, C/o Increment P Corporation, Meguro-ku, Tokyo-to (JP); Kawakami, Shuji, Asaka-shi, Saitama-ken (JP); Shoji, Nobuhiro, Yamaichisaruesutetu 201, Tokyo-to (JP)
(74) Representative: Haley, Stephen

(57) **Abstract**

To provide a system for taking out an insurance policy which uses a communication navigation system utilizing an Internet (IN). A terminal apparatus (T) transmits a destination or a route that is set based on an instruction of a user to a server apparatus (SV) via the Internet (IN), The server apparatus (SV) retrieves stored insured contents according to a purpose of travel or a traveling state that is received from the terminal apparatus (T) to prepare an insurance list and transmits this insurance list to the terminal apparatus (T) via the Internet (IN).

## Description

The present invention relates to a system for taking out an insurance policy and a method of taking out an insurance policy that can present an insurance according to a purpose of movement of a mobile unit such as a destination or a traveling state such as a travel position of a mobile unit to a user of a portable terminal or a communication navigation terminal apparatus, as well as a server apparatus and a terminal apparatus that are used in the system and the method.

There is known a system for performing procedures for taking out an insurance policy by a dedicated terminal machine before boarding when a user takes an airplane. On the other hand, there is an automobile insurance as an insurance for an automobile. However, in such an automobile insurance there is not usually a system for a user to take out an insurance policy while the user is moving using an automobile. Thus, the user cannot take out an insurance policy according to a destination or a change in conditions, or the like, each time such a destination is set or such a change occurs.

On the other hand, as a situation for a user to take out an insurance policy for a small insurance, it is under consideration to take out an insurance policy from a personal computer, a portable terminal or the like. However, among systems utilizing a personal computer, a portable terminal or the like, a system is not proposed with which a user takes out an insurance policy for an insurance that matches a destination and a route while a user is driving or a change in a present position of the user, road conditions or the like

If an appropriate insurance is proposed on the spot according to a destination and a route while a user is driving an automobile or the like or to a change in conditions and a user of a portable terminal or the like can take out an insurance policy for the insurance, it is convenient for the user and sales promotion of the insurance can be realized. This is the reason why a system for enabling a user to take out an insurance policy for such an insurance is expected.

For example, as a system capable of grasping a destination and a route while a user is driving an automobile or the like or a change in conditions, there is a communication navigation system. This communication navigation system is a system for transmitting map data accumulated in a map database site to various navigation terminal apparatuses such as a vehicle-mounted navigation apparatus, a portable navigation apparatus, a PDA and a cellular phone via a computer network such as the Internet and communication means such as a mobile communication network in response to requests from the navigation terminal apparatuses, and carrying out navigation for guiding a user to a destination according to positional detection data by a mounted GAS and the map data transmitted from a server apparatus in each navigation terminal apparatus.

On the other hand, as an insurance relating to a mobile unit such as an automobile, there is for example an automobile insurance. For this automobile insurance, there are a non-life insurance for an automobile and an automobile accident and a voluntary insurance such as a normal automobile insurance and a personal compensation insurance.

However, an insurance system has been sought with which a user can easily take out an insurance policy for an insurance that is advantageous for the user using a communication navigation system with respect to a so-called given accident that is derived from an accident or the like that has occurred despite the fact that the user was driving safely.

The present invention has been achieved in view of these problems, and it is an object of the present invention to provide a system for taking out an insurance policy, or the like, with which a user can easily take out an insurance policy for an insurance for a destination, a route or the like when the user is using an automobile.

In addition, it is another object of the present invention to provide a system for taking out an insurance policy, or the like, with which a user can take out an insurance policy on the spot for an appropriate insurance according to a change in conditions while the user is driving an automobile or the like.

It is yet another object of the present invention to provide a system for taking out an insurance policy, a server apparatus and a communication navigation terminal apparatus in a communication navigation apparatus with which a user can take out an insurance policy for a safety drive insurance on a real time basis and which is capable of grasping travel conditions of the user.

The above object of the present invention can be achieved by a system of the present invention for taking out an insurance policy using a communication navigation system for carrying out navigation by utilizing map data accumulated in a map database site and present position data of a terminal apparatus and transmitting the map data from a server apparatus to the terminal apparatus via a communication network. In the system, the terminal apparatus is provided with: an information transmitting device for transmitting information on a purpose of travel or a traveling state, which is set based on an instruction of a user, to the server apparatus via the communication network. Further, the server apparatus is provided with: a storing device for storing insured contents; a list preparing device for retrieving the insured contents stored in the storing device to prepare an insurance list according to the information on a purpose of travel or a traveling state received from the terminal apparatus; and a list transmitting device for transmitting the insurance list prepared by the list preparing device to the terminal apparatus via the communication network.

According to the present invention, since an insurance list is prepared according to information on a purpose of travel or a traveling state received from a terminal apparatus and this insurance list is transmitted to the terminal apparatus via a communication network, an appropriate insurance list according to the information on purpose of travel and the traveling state can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. Further, the insurance list may include an insurance rate and various conditions for each insurance in addition to insured contents. In addition, the storing device may be connected to the list preparing device via a communication network such as an Internet. In short, it is sufficient if an entire server apparatus is configured such that the above-described each device functions, and a method of transmitting and receiving information between each device is not limited.

In one aspect of the present invention, the information transmitting device transmits a destination or a route that is set based on an instruction of the user to the server apparatus via the communication network, and the list preparing device retrieves the insured contents stored in the storing means to prepare an insurance list according to the destination or route received from the terminal apparatus.

According to this aspect, since an insurance list is prepared according to a destination or a route received from a terminal apparatus and this insurance list is transmitted to the terminal apparatus via a communication network, an appropriate insurance list according to the destination or the route can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. For example, if a destination is set at a golf course, a golf insurance can be presented. In addition, if there is a point with heavy snow on the route to the destination, a snow/slip insurance can be presented. Further, the insurance list may include an insurance rate and various conditions for each insurance other than insured contents. In addition, the storing device may be connected to the list preparing device via a communication network such as the Internet. In short, it is sufficient if an entire server apparatus is configured such that the above-described each device functions, and a method of transmitting and receiving information between each device is not limited.

In another aspect of the present invention, the information transmitting devices transmits information on travel during the travel of a mobile unit to the server apparatus via the communication network, and the list preparing device retrieves the insured contents stored in the storing device to prepare an insurance list according to the information on travel received from the terminal apparatus.

According to this aspect, since an insurance list is prepared according to information on travel received from a terminal apparatus and this insurance list is transmitted to the terminal apparatus via a communication network, an appropriate insurance list according to a change in conditions can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. Further, the insurance list may include an insurance rate and various conditions for each insurance in addition to insured contents. In addition, the storing device may be connected to the list preparing device via a communication network such as the Internet. In short, it is sufficient if an entire server apparatus is configured such that the above-described each device functions, and a method of transmitting and receiving information between each device is not limited.

In further aspect of the present invention, the information on travel includes positional information of the mobile unit.

According to this aspect, an insurance of appropriate contents can be presented to the user of the terminal apparatus according to a position of the mobile unit.

In further aspect of the present invention, the terminal apparatus is provided with: a displaying device for displaying the insurance list received from the server apparatus; a receiving device for receiving an instruction to select a predetermined insurance out of the insurance list displayed on the displaying device; and an insurance transmitting device for transmitting the insurance selected according to the instruction with respect to the receiving device to the server apparatus via the communication network.

According to this aspect, the user of the terminal apparatus selects a predetermined insurance out of the insurance list displayed on displaying means and the selected insurance is transmitted to the server apparatus. Thus, thereafter, a seller or the like of an insurance can take procedures required for the user of the terminal apparatus, or the like, to take out an insurance policy for the insurance transmitted to the server apparatus. The user of the terminal apparatus can take out an insurance policy for a desired insurance simply by selecting an insurance out of the insurance list displayed on the display apparatus.

In further aspect of the present invention, the terminal apparatus is provided with: a receiving device for receiving an application for taking out an insurance policy; a storing device for storing the insurance received by the receiving device and information on the receipt by the receiving device; an insurance transmitting device for transmitting the insurance stored in the storing device to the server apparatus together with the information on receipt by the receiving device when communication is possible.

According to this aspect, an insurance received by receiving device and information on receipt by the receiving device are temporarily stored, and the stored insurance is transmitted to the server apparatus together with the information on the receipt by the receiving device when communication is possible. Thus, even if communication is impossible between the terminal apparatus and the server apparatus, an application for taking out an insurance policy can be received.

The information on receipt may include a position of the terminal apparatus and time when the application is received.

In further aspect of the present invention, the terminal apparatus is provided with a first terminal apparatus that is provided in a mobile unit and receives the map data transmitted from the server apparatus via a communication network and a second terminal apparatus connected to the communication network. Further the second terminal apparatus is provided with: an inputting device for receiving an input of a destination; and an information transmitting device for transmitting a destination received by the inputting device or a route to the destination to the server apparatus via the communication network. Moreover, the server apparatus is provided with: a storing device for storing insured contents; a list preparing device for retrieving the insured contents stored in the storing device to prepare an insurance list according to the destination or the route received from the second terminal apparatus; and a list transmitting device for transmitting the insurance list prepared by the list preparing device to the second terminal apparatus via the communication network.

According to this aspect, since an insurance list is prepared according to a destination or a route received from a second terminal apparatus and this insurance list is transmitted to the second terminal apparatus via a communication network, an appropriate insurance list according to the destination or the route can be transmitted to the second terminal apparatus. Therefore, an insurance of specific contents can be presented to a user of the second terminal apparatus at appropriate timing, sales promotion of an insurance can be realized and the user of the second terminal apparatus can easily take out an insurance policy for a necessary insurance without complicated procedures. For example, if a destination is set at a golf course, a golf insurance can be presented. In addition, if there is a point with heavy snow on the route to the destination, a snow/slip insurance can be presented. Further, the insurance list may include an insurance rate and various conditions for each insurance other than insured contents. In addition, the storing device may be connected to the list preparing device via a communication network such as the Internet. In short, it is sufficient if an entire server apparatus is configured such that the above-described each device functions, and a method of transmitting and receiving information between each device is not limited,

In further aspect of the present invention, the second terminal apparatus is provided with: a displaying device for displaying the insurance list received from the server apparatus; a receiving device for receiving an instruction for selecting a predetermined insurance out of the insurance list displayed on the displaying device; and an insurance transmitting device for transmitting a selected insurance according to an instruction with respect to the receiving device to the server apparatus via the communication network.

According to this aspect, the user of the second terminal apparatus selects a predetermined insurance out of the insurance list displayed on displaying device and the selected insurance is transmitted to the server apparatus. Thus, thereafter, a seller or the like of an insurance can take procedures required for the user of the terminal apparatus, or the like, to take out an insurance policy for the insurance transmitted to the server apparatus. The user of the second terminal apparatus can take out an insurance policy for a desired insurance simply by selecting an insurance out of the insurance list displayed on the display apparatus.

In further aspect of the present invention, the list preparing device prepares the insurance list with reference to information obtained via the communication network.

According to this aspect, for example, an insurance list, an insurance rate for each insurance can be set with reference to information from an insurance company, a driving history of the user of the terminal apparatus obtained via the terminal apparatus and the navigation system, for example, whether or not the user usually drives safely or whether or not the user has a lot of opportunities of driving on mountain paths.

The information may be weather information or traffic information.

For example, the contents of the presented insurance can be changed and the insurance rate can be exchanged according to weather information or traffic information.

The above object of the present invention can be achieved by a system of the present invention for taking out an insurance policy in a communication apparatus that is provided with a server apparatus for transmitting navigation information via communicating means and a terminal apparatus for receiving and accumulating the navigation information transmitted from the server apparatus via the communicating means and moving with a mobile unit and carries out navigation of the mobile unit in accordance with the navigation information. The system is provide with: an inputting device for carrying out an input for taking out an insurance policy and registering for a safety drive insurance from the terminal apparatus; a travel data obtaining device that is provided in the terminal apparatus and obtains travel data of the mobile unit; and a driving conditions determining device that is provided in at least one of the server apparatus and the terminal apparatus for receiving the travel data to determine whether or not a user is driving within a coverage of the safety drive insurance.

According to the present invention, the user performs an input for taking out an insurance policy and registering in a safety drive insurance from the terminal apparatus, and at least the terminal apparatus among the server apparatus and the terminal apparatus receives travel data of the mobile unit from the user and determines whether or not the user is driving within the coverage of the safety drive insurance. Thus, the user can take out an insurance policy for the safety drive insurance on a real time basis, which leads to safety drive of the user, using the communication navigation apparatus and, at the same time, at least the terminal apparatus can grasp travel conditions of the user.

The above object of the present invention can be achieved by a method of the present invention of taking out an insurance policy using a communication navigation system that carries out navigation by utilizing map data accumulated in a map database site and present position data of a terminal apparatus and transmitting the map data from a server apparatus to the terminal apparatus via a communication network. The method is provided with the processes of transmitting information on a purpose of travel or a traveling state that is set based on an instruction of a user to the server apparatus by an information transmitting device of the terminal apparatus via the communication network; retrieving the insured contents stored in a storing device of the server apparatus for storing insured contents and preparing an insurance list by a list preparing device of the server apparatus according to the received information on purpose of travel or traveling state; and transmitting the insurance list prepared by the list preparing device to the terminal apparatus by a list transmitting device of the server apparatus via the communication network.

According to the present invention, since an insurance list is prepared according to a purpose of travel or a traveling state received from a terminal apparatus and this insurance list is transmitted to the terminal apparatus via a communication network, an appropriate insurance list according to the purpose of travel and the traveling state can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. Further, the insurance list may include an insurance rate and various conditions for each insurance in addition to insured contents. In addition, storing device may be connected to list preparing device via a communication network such as the Internet. In short, it is sufficient if an entire server apparatus is configured such that the above-described each device functions, and a method of transmitting and receiving information between each device is not limited.

In one aspect of the present invention, the process of transmitting the information on purpose of travel or traveling state transmits a destination or a route that is set based on an instruction of the user, and the process of preparing the insurance list prepares an insurance list according to the received destination or route.

According to this aspect, since an insurance list is prepared according to a destination or a route received from a terminal apparatus and this insurance list is transmitted to the terminal apparatus via a communication network, an appropriate insurance list according to the destination or the route can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. For example, if a destination is set at a golf course, a golf insurance can be presented. In addition, if there is a point with heavy snow on the route to the destination, a snow/slip insurance can be presented. Further, the insurance list may include an insurance rate and various conditions for each insurance other than insured contents. In addition, the storing means may be connected to the list preparing means via a communication network such as the Internet. In short, it is sufficient if an entire server apparatus is configured such that the above-described each device functions, and a method of transmitting and receiving information between each device is not limited.

In another aspect of the present invention, the process of transmitting the information on purpose of travel or traveling state transmits information on travel while the mobile unit is traveling, and the process of preparing the insurance list prepares an insurance list according to the received information on travel.

According to this aspect, since an insurance list is prepared according to information on travel received from a terminal apparatus and this insurance list is transmitted to the terminal apparatus via a communication network, an appropriate insurance list according to a change in conditions can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. Further, the insurance list may include an insurance rate and various conditions for each insurance in addition to insured contents. In addition, the storing device may be connected to the list preparing device via a communication network such as the Internet. In short, it is sufficient if an entire server apparatus is configured such that the above-described each device functions, and a method of transmitting and receiving information between each device is not limited.

The information on travel may include positional information of a mobile unit. In this case, an insurance of appropriate contents can be presented to the user of the terminal apparatus according to a position of the mobile unit.

In further aspect of the present invention, the method is further comprises the processes of: displaying the insurance list received from the server apparatus on a displaying device of the terminal apparatus; receiving an instruction to select a predetermined insurance out of the insurance list displayed on the displaying device by a receiving device of the terminal apparatus; and transmitting the insurance selected according to the instruction with respect to the receiving device to the server apparatus by an insurance transmitting device of the terminal apparatus via the communication network.

According to this aspect, the user of the terminal apparatus selects a predetermined insurance out of the insurance list displayed on displaying device and the selected insurance is transmitted to the server apparatus. Thus, thereafter, a seller or the like of an insurance can take procedures required for the user of the terminal apparatus, or the like, to take out an insurance policy for the insurance transmitted to the server apparatus. The user of the terminal apparatus can take out an insurance policy for a desired insurance simply by selecting an insurance out of the insurance list displayed on the display apparatus.

The process of preparing the insurance list may prepare an insurance list with reference to information obtained via a communication network

According to this aspect, for example, an insurance list, an insurance rate for each insurance can be set with reference to information from an insurance company, a driving history of the user of the terminal apparatus obtained via the terminal apparatus and the navigation system, for example, whether or not the user usually drives safely or whether or not the user has a lot of opportunities of driving on mountain paths.

The information obtained via the communication network may include weather information or traffic information. In this case, insured contents and an insurance rate according to weather over a route and traffic conditions of the route can be presented by obtaining the weather information and the traffic information.

In further aspect of the present invention, the method is provided with the processes of: receiving an application for taking out an insurance policy by a receiving device of the terminal apparatus;
causing a storing device to store the insurance received by the receiving device and information on the receipt by the receiving device; and transmitting the insurance stored in the storing device to a server apparatus by an insurance transmitting device of the terminal apparatus together with the information on the receipt by the receiving device when communication is possible.

According to this aspect, an insurance received by receiving means and information on receipt by the receiving means are temporarily stored, and the stored insurance is transmitted to the server apparatus together with the information on the receipt by the receiving means when communication is possible. Thus, even if communication is impossible between the terminal apparatus and the server apparatus, an application for taking out an insurance policy can be received.

The information on receipt may include a position of the terminal apparatus and time when the application is received.

The above object of the present invention can be achieved by a server apparatus of the present invention to be used in communication navigation system for carrying out navigation by utilizing map data accumulated in a map database site and present position data of a terminal apparatus and transmitting the map data from the server apparatus to the terminal apparatus via a communication network. The apparatus is provided with: a storing device for storing insured contents; a list preparing device for retrieving the insured contents stored in the storing device to prepare an insurance list according to the purpose of travel or traveling state that is set based on an instruction of a user received from the terminal apparatus; and a list transmitting device for transmitting the insurance list prepared by the list preparing device to the terminal apparatus via the communication network.

According to the present invention, since an insurance list is prepared according to a purpose of travel or a traveling state received from a terminal apparatus and this insurance list is transmitted to the terminal apparatus via a communication network, an appropriate insurance list according to the purpose of travel and the traveling state can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. Further, the insurance list may include an insurance rate for each insurance in addition to insured contents.

In one aspect of the present invention, the list preparing device prepares the insurance list according to a destination or a route that is set based on an instruction of the user received from the terminal apparatus.

According to this aspect, since an insurance list is prepared according to a destination or a route received from a terminal apparatus and this insurance list is transmitted to the terminal apparatus via a communication network, an appropriate insurance list according to the destination or the route can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. For example, if a destination is set at a golf course, a golf insurance can be presented In addition, if there is a point with heavy snow on the route to the destination, a snow/slip insurance can be presented. Further, the insurance list may include an insurance rate for each insurance other than insured contents.

In another aspect of the present invention, the server apparatus transmits the map data to a first terminal apparatus via a communication network, and the list preparing device retrieves the insured contents stored in the storing device to prepare an insurance list according to a route to a destination that is set based on the instruction of the user received from a second terminal apparatus, and the list transmitting device transmits the insurance list to the second terminal apparatus via the communication network.

According to this aspect, since an insurance list is prepared according to a destination or a route received from a second terminal apparatus and this insurance list is transmitted to the second terminal apparatus via a communication network, an appropriate insurance list according to the destination or the route can be transmitted to the second terminal apparatus. Therefore, an insurance of specific contents can be presented to a user of the second terminal apparatus at appropriate timing, sales promotion of an insurance can be realized and the user of the second terminal apparatus can easily take out an insurance policy for a necessary insurance without complicated procedures. For example, if a destination is set at a golf course, a golf insurance can be presented. In addition, if there is a point with heavy snow on the route to the destination, a snow/slip insurance can be presented. Further, the insurance list may include an insurance rate for each insurance other than insured contents.

In further aspect of the present invention, the list preparing device prepares the insurance list according to information on travel during travel of a mobile unit received from the terminal apparatus.

According to this aspect, since an insurance list is prepared according to information on travel received from a terminal apparatus and this insurance list is transmitted to the terminal apparatus via a communication network, an appropriate insurance list according to a change in conditions can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. Further, the insurance list may include an insurance rate and various conditions for each insurance in addition to insured contents. In addition, the storing means may be connected to the list preparing means via a communication network such as the Internet. In short, it is sufficient if the entire server apparatus is configured such that the above-described each device functions, and a method of transmitting and receiving information between each device is not limited.

In further aspect of the present invention, the apparatus is further provided with an insurance receiving device for receiving an insurance for which an application for taking out an insurance policy is received by a receiving device of the terminal apparatus and information on the receipt.

According to this aspect, an insurance received by the receiving device and information on receipt by the receiving device are temporarily stored, and the stored insurance is transmitted to the server apparatus together with the information on the receipt by the receiving device when communication is possible. Thus, even if communication is impossible between the terminal apparatus and the server apparatus, an application for taking out an insurance policy can be received.

The above object of the present invention can be achieved by a server apparatus of the present invention to be used for a system for taking out an insurance policy in a communication navigation apparatus that transmits navigation information to a terminal apparatus moving with a mobile unit via communicating means and carries out navigation of said mobile unit in accordance with this navigation information. The apparatus is provided with: a travel history storing device for receiving travel data of the mobile unit received by the terminal apparatus to store its history; and a driving conditions determining device for determining whether or not a user is driving within a coverage of a safety drive insurance based on the history of travel data.

According to the present invention, the travel history storing device for receiving travel data obtained by the terminal apparatus to store its history is provided, and traveling conditions of a user can be always grasped by determining whether or not the user is driving within a coverage of a safety drive insurance based on the history of the travel data.

In one aspect of the present invention, the apparatus is further provided with a setting device for setting a rate of the safety drive insurance based on the history of travel data.

According to this aspect, a rate of the safety drive insurance is set based on the history of the travel data, whereby the rate of the insurance is changed according to the driving history of the user, an own car position, or the like as well as the number of times of taking out an insurance policy, the number of times of being applied an insurance, or the like. As a result, an insurance advantageous to the user can be provided.

The above object of the present invention can be achieved by a terminal apparatus of the present invention to be used in communication navigation system for carrying out navigation by utilizing map data accumulated in a map database site and present position data of the terminal apparatus and transmitting the map data from a server apparatus to the terminal apparatus via a communication network. The apparatus is provided with: an information transmitting device for transmitting information on a purpose of travel or traveling state that is set based on an instruction of a user to the server apparatus, which retrieves insured contents stored in a storing device according to the information on purpose of travel or traveling state to prepare an insurance list and transmits the insurance list to the terminal apparatus via the communication network, via the communication network.

According to the present invention, since an insurance list is prepared according to a purpose of travel or a traveling route received from the terminal apparatus and this insurance list is transmitted to the terminal apparatus via a communication network, an appropriate insurance list according to the purpose of travel and the traveling route can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. Further, the insurance list may include an insurance rate and various conditions for each insurance in addition to insured contents. In addition, the storing device may be connected to the list preparing device via a communication network such as the Internet. In short, it is sufficient if an entire server apparatus is configured such that the above-described each device functions, and a method of transmitting and receiving information between each device is not limited.

In one aspect of the present invention, the information transmitting device transmits a destination or a route that is set based on an instruction of the user, and the server apparatus prepares an insurance list according to the received destination or route.

According to this terminal apparatus, since an insurance list is prepared according to a destination or a route received from the terminal apparatus and this insurance list is transmitted to the terminal apparatus via a communication network, an appropriate insurance list according to the destination or the route can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. For example, if a destination is set at a golf course, a golf insurance can be presented. In addition, if there is a point with heavy snow on the route to the destination, a snow/slip insurance can be presented. Further, the insurance list may include an insurance rate and various conditions for each insurance other than insured contents. In addition, the storing device may be connected to the list preparing means via a communication network such as the Internet. In short, it is sufficient if an entire server apparatus is configured such that the above-described each device functions, and a method of transmitting and receiving information between each device is not limited.

In another aspect of the present invention, the information transmitting device transmits information on travel during travel of a mobile unit, and the server apparatus prepares an insurance list according to the received information on travel.

According to this aspect, since an insurance list is prepared according to information on travel received from the terminal apparatus and this insurance list is transmitted to the terminal apparatus via a communication network, an appropriate insurance list according to a change in conditions can be transmitted to the terminal apparatus. Therefore, an insurance of specific contents can be presented to a user of the terminal apparatus at appropriate timing, sales promotion of an insurance can be realized and the user can easily take out an insurance policy for a necessary insurance without complicated procedures. Further, the insurance list may include an insurance rate and various conditions for each insurance in addition to insured contents. In addition, the storing device may be connected to the list preparing device via a communication network such as the Internet. In short, it is sufficient if an entire server apparatus is configured such that the above-described each device functions, and a method of transmitting and receiving information between each device is not limited.

In further aspect of the present invention, the apparatus is further provided with: a receiving device for receiving an application for taking out an insurance policy; a storing device for storing an insurance for which an application is received by the receiving device and information on the receipt by the receiving device; and an insurance transmitting device for transmitting the insurance stored in the storing device to a server apparatus together with the information on the receipt by the receiving device.

According to this terminal apparatus, an insurance received by receiving device and information on receipt by the receiving device are temporarily stored, and the stored insurance is transmitted to the server apparatus together with the information on the receipt by the receiving device when communication is possible. Thus, even if communication is impossible between the terminal apparatus and the server apparatus, an application for taking out an insurance policy can be received.

The above object of the present invention can be achieved by a terminal apparatus of the present invention to be used for a system for taking out an insurance policy in communication navigation that receives and accumulates navigation information transmitted from a server apparatus via communicating means and moving with a mobile unit to carry out navigation of a mobile unit in accordance with the navigation information. The apparatus is provided with: an inputting device for taking out an insurance policy and registering for a safety drive insurance.

According to the present invention, since inputting means with which a user performs an input for taking out an insurance policy and registering for a safety drive insurance is provided, the user can take out an insurance policy for the safety drive insurance, which leads to safety drive of the user, on a real time basis using a communication navigation apparatus.

In one aspect of the present invention, the apparatus is further provided with: a travel data obtaining device for obtaining travel data of the mobile unit; and a driving conditions determining device for determining whether or not the user is driving within a coverage of said safety drive insurance based on the travel data.

According to this aspect, traveling conditions of a user can be always grasped by obtaining travel data of a mobile unit and determining whether or not the user is driving within a coverage of a safety drive insurance based on the history of the travel data.

In another aspect of the present invention, the driving conditions determining device determines whether or not the user is driving within the coverage of the safety drive insurance according to whether or not the user travels within a travel speed and a travel route based on the navigation information.

According to this aspect, it is determined whether or not driving is within the coverage of the safety drive insurance according to whether or not the travel is within a travel speed and a travel route based on navigation information. As a result, an appropriate insurance can be set for an accident that has occurred when the user was driving safely.

In further aspect of the present invention, it is determined by the driving conditions determining device that the user is driving within a coverage of the safety drive insurance, and a low rate of the safety drive insurance is applied to an accident that occurs under the driving conditions.

According to this aspect, a low rate of the safety drive insurance is applied to an accident that has occurred under the situation in which a user was driving within a coverage of a safety insurance. As a result, an insurance advantageous to the user can be provided.

In further aspect of the present invention, the apparatus is further provided with an alarming device for emitting an alarm to the user if the user is driving outside the coverage of said safety drive insurance.

According to this aspect, if the user is driving outside a coverage of a safety drive insurance, an alarm is emitted to the user, thereby urging the user to drive safely.

In further aspect of the present invention, travel data of the mobile unit is position information, time information and speed information of said mobile unit.

According to this aspect, travel data of a vehicle is positional information of the vehicle, time information and speed information, whereby it can be easily determined whether or not driving is within a coverage of an insurance.

In the Drawings;
FIG. 1A is a block diagram showing an entire configuration of a navigation system constituting a system for taking out an insurance policy of a first embodiment;
FIG. 1B is a block diagram showing a detailed configuration of a server apparatus of the navigation system;
FIG. 1C is a block diagram showing a detailed configuration of a terminal apparatus of the navigation system;
FIG. 2 is a flow chart showing processing for taking out an insurance policy in accordance with the embodiment;
FIG. 3A is a block diagram showing an entire configuration of a navigation system constituting a system for taking out an insurance policy of a second embodiment;
FIG. 3B is a block diagram showing a detailed configuration of a personal computer (second terminal apparatus) of the navigation system;
FIG. 4 is a flow chart showing processing for taking out an insurance policy in accordance with a third embodiment;
FIG. 5 is a flow chart showing processing for taking out an insurance policy in accordance with the third embodiment;
FIG. 6 is a block diagram showing an entire configuration of a navigation system of a fourth embodiment; and
FIG. 7 is a flow chart showing a system for taking out an insurance policy of the fourth embodiment.

### [First embodiment]

A first embodiment of a system for taking out an insurance policy of the present invention will be hereinafter described based on the drawings.

Note that the embodiment described below is an embodiment in which the present invention is applied to a navigation system that includes a terminal apparatus mounted on a vehicle, a server apparatus connected to the terminal apparatus via a network such as the Internet and the network and assists movement of the vehicle mounted with the terminal apparatus.

### (Entire configuration)

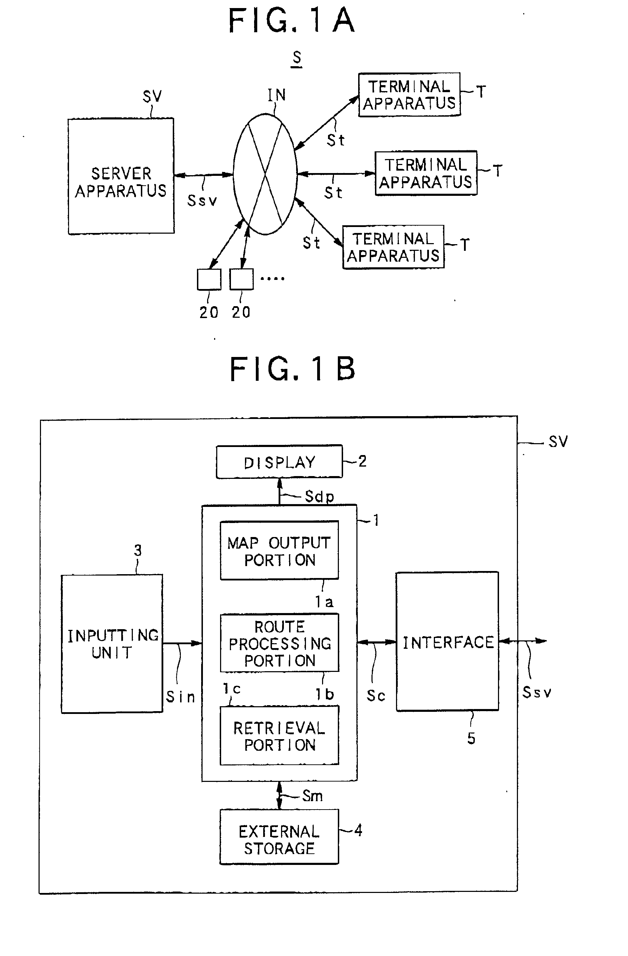

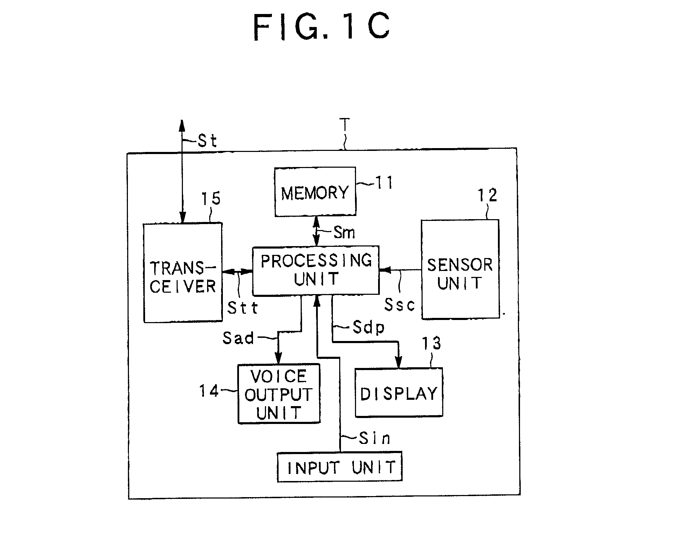

First, an entire configuration of a navigation system constituting a system for taking out an insurance policy in accordance with the embodiment will be described with reference to FIG. 1.

Further, FIG. 1 is a block diagram showing a configuration of the navigation system in accordance with the embodiment.

This navigation system transmits map data and route guiding information to various navigation terminals such as a vehicle-mounted navigation apparatus or a portable navigation apparatus, a PDA and a cellular phone from a server via a computer network such as the Internet and a mobile communication network as required by the navigation terminals, thereby executing navigation. Each navigation terminal can carry out predetermined display or the like based on positional detection data by a GPS (Global Positioning System) mounted on the terminal and the map data and the route guiding information transmitted from the server, thereby guiding a user to a destination.

As shown in FIG. 1A, a navigation system S in accordance with the embodiment is provided with a terminal apparatus T and a server apparatus SV. The terminal apparatus T transmits request information for requesting information on a present position and a traveling direction of a vehicle and information to be presented to a driver as a terminal signal St to a server apparatus SV via the Internet IN and, at the same time, receives various kinds of information for navigation processing transmitted from the server apparatus SV via the Internet IN in response to the request information as the terminal signal St, and presents the information to the driver. The server apparatus SV receives the terminal signal St transmitted from the terminal apparatus T via the Internet IN as a server signal S_{SV}, carries out processing described below including retrieval processing of map information or the like to be presented to the driver on the terminal apparatus T, guiding route search processing of a vehicle mounted with the terminal apparatus T, or the like, based on the server signal S_{SV}, and transmits a result of the processing to the terminal apparatus T as the server signal Sₛᵥ via the Internet IN.

Further, one server SV is configured such that it becomes possible to transmit necessary map information or the like to a plurality of terminal apparatuses T in a time divisional manner as shown in FIG. 1A.

In addition, servers 20 such as a server for providing weather information including a weather forecast and present weather, traffic information and event information and a server owned by an insurance company are connected to the Internet IN.

Next, a detailed configuration of each component will be described.

First, as shown in FIG. 1B, the server apparatus SV is provided with a CPU 1, a display unit 2, an input unit 3, an external storage 4 consisting of a hard disk device or the like, and an interface 5.

In this configuration, the interface 5 applies preset input interface processing to the server signal S_{SV} inputted from the Internet IN and outputs the signal to the CPU 1 as a processed server signal Sc. When the processed server signal Sc that should be transmitted to the terminal apparatus T is transmitted from the CPU 1, the interface 5 also applies preset output interface processing to the processed server signal Sc and outputs the signal to the terminal apparatus T as the server signal Sₛᵥ via the Internet IN.

Next, the external storage 4 accumulates and stores all kinds of information required for navigation processing, which is executed as the navigation system of the embodiment, such as map information that should be displayed on the terminal apparatus T. The external storage 4 outputs the information to the CPU 1 as a memory signal Sm, if necessary.

On the other hand, the CPU 1 is provided with a map output portion 1a, a route processing portion 1b and a retrieval portion 1c for processing.

The map output portion 1a retrieves map information corresponding to the request information inputted as the processed server signal Sc out of the map information stored in the external storage 4 based on the request information to read it out as the memory signal Sm and outputs the memory signal Sm to the interface 5 as the processed server signal Sc. The processed server signal Sc is to be outputted to the terminal apparatus T as the server signal S_{SV} via the Internet IN.

In addition, the route processing portion 1b calculates and searches a route on which a vehicle should travel using the map information stored in the external storage 4 based on the request information inputted as the processed server signal Sc, retrieves map information including the searched route to read it out as the memory signal Sm and outputs the signal to the interface 5 as the processed server signal Sc. The processed server signal is to be outputted to the terminal apparatus T as the server signal S_{SV} via the Internet IN.

Concurrently with the above-described processing, the route processing portion 1b generates route guiding information required for guiding a vehicle provided with the terminal apparatus T such that the vehicle moves along the above-described searched route. The route processing portion 1b then outputs the resulting route guiding information to the interface 5 as the processed server signal Sc. The processed server signal Sc is to be outputted to the terminal apparatus T as the server signal Ssv via the Internet IN.

The retrieval portion 1c retrieves point information stored in the external storage 4 based on the above-described request information inputted as the processed server signal Sc to read it out as the memory signal Sm and outputs the signal to the interface 5 as the processed server signal Sc. The processed server signal Sc is to be outputted to the terminal apparatus T as the server signal S_{SV} via the Internet IN.

In addition, as described below, the retrieval portion 1c retrieves insured contents or the like stored in the server 20 of an insurance company via the interface 5 and the Internet IN with a destination instructed by a user of the terminal apparatus T and a route, which is set according to the destination, as conditions for retrieval. The retrieval portion 1c then prepares an insurance list meeting the conditions for retrieval. Moreover, the retrieval portion 1c outputs this insurance list to the terminal apparatus T as the processed server signal Sc via the interface 5 and the Internet IN.

On the other hand, when necessary information input processing is executed in the input unit 3 in response to the above-described processing, the input unit 3 generates an input signal Sin corresponding to the information input processing and outputs it to the CPU 1. Then, the CPU 1 executes processing that matches contents of the input signal Sin.

In addition, information that should be presented to an operator of the server apparatus SV each time the above-described processing is executed is outputted to the display unit 2 as a display signal Sdp. The display unit 2 displays information corresponding to the display signal Sdp.

Next, as shown in FIG. 1C, the terminal apparatus T is provided with a processing unit 10 consisting of a CPU, a necessary memory or the like, a memory 11, a sensor unit 12, a display unit 13, a voice output unit 14, a transceiver 15 such as a cellular phone, and an input unit 16.

In this configuration, the transceiver 15 applies preset input interface processing to the terminal signal St inputted from the Internet IN and outputs the signal to the processing unit 10 as a processed terminal signal Stt. When the processed terminal signal Stt that should be transmitted to the server apparatus SV is transmitted from the processing unit 10, the transceiver 15 also applies the preset output interface processing to the processed terminal signal Stt and outputs the signal to the server apparatus SV via the Internet IN.

Next, the sensor unit 12 specifically is provided with: a GPS (Global Positioning System) receiver for outputting absolute position information (absolute position information indicated by a latitude and a longitude) of a vehicle mounted with the terminal apparatus T based on positional information contained in a GPS electric wave transmitted from a GAS satellite on a satellite orbit; a vehicle speed sensor for calculating a mileage and a speed of the vehicle based on a vehicle speed pulse, which is transmitted following a rotation of wheels provided in the vehicle, and outputs distance information and speed information; and an acceleration sensor for detecting a revolution angle and a vertical inclination of the vehicle and outputs information on a traveling direction of the vehicle. The sensor unit 12 outputs information indicating a present position, a posture or the like of the vehicle outputted from the sensors and the receiver to the processing unit 10 as a sensor signal S_{SC}.

On the other hand, when designation of navigation processing in accordance with the embodiment such as designation of a map that the user wishes to cause the display unit 13 to display, setting of a destination, or the like, is executed in the input unit 16, the input unit 16 generates the input signal Sin corresponding to the executed designation and output it to the processing unit 10.

Thus, the processing unit 10 generates present position information indicating a present position of the vehicle mounted with the terminal apparatus T and request information or the like corresponding to the designation executed in the input unit 16 based on the sensor signal S_{SC}. The processing unit 10 then outputs the information to the server apparatus SV as a processed terminal signal Stt via the transceiver 15.

Then, when a result corresponding to the processing executed in the server apparatus SV based on the outputted request information and the present position information is transmitted as the processed terminal signal Stt via the internet IN and the transceiver 15, the processing unit 10 outputs map information that should be displayed included in the transmitted result to the display unit 15 as the display signal Sdp and causes the display unit 15 to display necessary map information. Further, map information along which the route is generated in the route processing portion 1b in the server apparatus SV or route information on which the route guiding information is based are also included in the information displayed in on the display unit 15 other than the above-described map information.

In addition, the processing unit 10 outputs contents, which should be notified to a driver of a vehicle by voices, in the route guiding information to the voice output unit 14 as a voice signal Sad and causes the voice output unit 14 to carry out the route guiding by a necessary voice output.

Moreover, information that should be temporarily stored such as map information transmitted from the server apparatus SV is outputted from the processing unit 10 as the memory signal Sm and temporarily stored and, then, read out again as the memory signal Sm, if necessary, to be served for processing such as necessary display.

### (Processing for taking out an insurance policy)

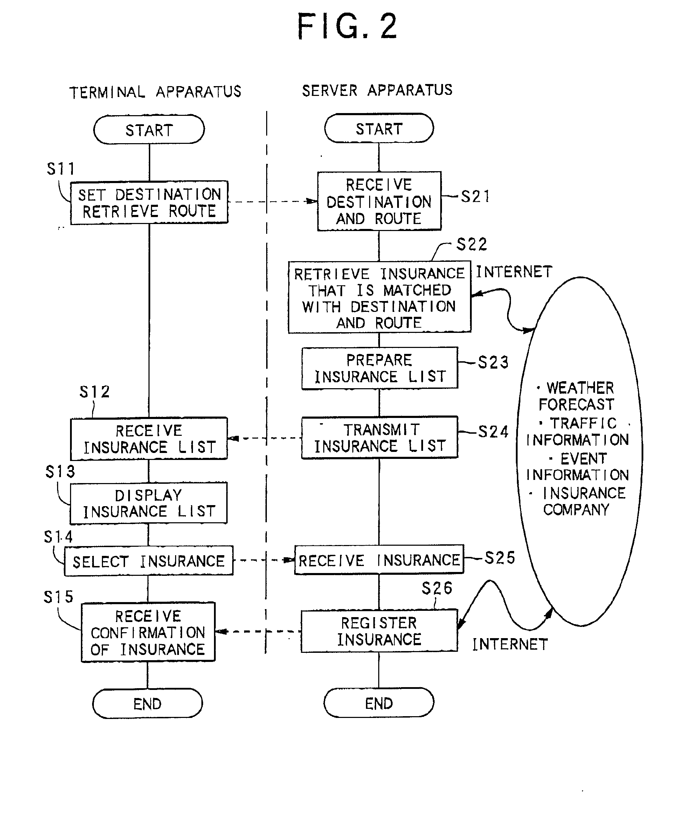

Next, processing for taking out an insurance policy using the above-described navigation system will be described with reference to FIG. 2.

In FIG. 2, steps S11 to S15 show processing in the terminal apparatus T and steps S21 to S26 show processing in the server apparatus SV.

As shown in FIG. 2, the terminal apparatus T executes processing for setting a destination and processing for setting a route from a present location to the destination (step S11). This processing for setting a route is executed in accordance with a destination inputted by an input operation of a user with respect to the input unit 3 and based on a communication result with the server SV. In addition, in step S11, the set destination and route are transmitted to the server apparatus SV. Further, such processing is included in normal navigation processing.

Upon receiving a destination and a route from the terminal apparatus T, the server apparatus SV retrieves insured contents or the like stored in the server 20 of an insurance company in the retrieval portion 1c and prepares an insurance list (steps S22 and S23). The server apparatus SV can obtain insured contents that a user of the terminal apparatus T would require by executing the retrieval with conditions for retrieval according to the destination and the route received from the terminal apparatus T. For example, if the destination is a golf course, a golf insurance can be included in the insurance list. In addition, if there is a point with heavy snow on the route to the destination, a snow/slip insurance can be included in the insurance list or, if a highway is used, an insurance limited to highways can be presented. In this way, appropriate insured contents or the like can be presented according to a situation in which an automobile runs. Information such as weather, road conditions or the like concerning the route can be obtained from each server 20 that provides weather information, traffic information, event information or the like via the Internet IN. Next, in step S24, this insurance list is transmitted to the terminal apparatus T via the Internet IN.

Upon receiving the insurance list transmitted from the server apparatus SV (step S12), the terminal apparatus T displays the received insurance list on the display unit 2 (step S13). Insured contents, an insurance premium for each insured content or the like are included in the insurance list. An insurance premium may be determined with reference to information obtained from each server 20 that provides weather information, traffic information, event information or the like via the Internet IN. The user of the terminal apparatus T can select a necessary insurance out of the displayed insurance list while looking at it and designate the selected insured content or the like by an input operation with respect to the input unit 3. Next, the terminal apparatus T discriminates the selected insured contents or the like based on an input operation with respect to the input unit 3 and transmits the selected insured contents to the server apparatus SV via the Internet IN (step S14).

Upon receiving the insured contents or the like transmitted from the terminal apparatus T (step S25), the server apparatus SV transmits the insured contents to an insurance company through the Internet IN to carry out registration of an insurance and, at the same time, transmits a report or the like to the effect that the insurance has been registered to the terminal apparatus T as a confirmation of the insurance via the Internet IN (step S26). In step S15, this confirmation of the insurance is received in the terminal apparatus T and the processing in the terminal apparatus T and the server apparatus SV ends.

In this way, the user can take out an insurance policy with a simple operation while looking at display of the terminal apparatus T in this embodiment. In addition, in this embodiment, insured contents matching a destination inputted by a user of the terminal apparatus T or a route to the destination obtained by calculation can be presented to the user at good timing. Thus, the user can take out an insurance policy for a small insurance on a real time base and procedures can be simplified. In addition, for a seller of an insurance, since an insurance of appropriate contents can be presented to a user at appropriate timing, sales of an insurance can be facilitated. Further, although processing for procedures for a user to take out an insurance policy is described in the above-described embodiment, similar processing can be executed for procedures for continuing an insurance and procedures for terminating an insurance via the terminal apparatus T.

As a characteristic of a navigation system, accurate positional information can be grasped in association with accurate time information. Thus, by recording the information, it becomes possible to determine whether an insurance is allowed to be applied or not according to a relationship between a route retrieved by the navigation system and a route on which an automobile actually ran. For example, it becomes possible to apply an insurance by limiting it to an accident on a route retrieved by the navigation system. Utilizing such a characteristic, for example, setting of an insurance limited to the case in which an automobile runs within a circuit becomes possible. In addition, it is also possible to sell an insurance applied to an accident that has occurred in the case in which a car navigation system guided an automobile erroneously.

Moreover, if the navigation system is a system for recording a locus of an automobile, a driver has feeling that his/her driving is watched, there also is an incidental advantage that the driver's consciousness for safe driving can be improved.

Further, as the terminal apparatus T in the first embodiment, a terminal apparatus of a single-unit type incorporating a communicating function may be used, or a terminal apparatus may be used in which a navigation apparatus provided with a recording medium such as a hard disk, a DVD or a CD-ROM and an information terminal apparatus having a communicating function such as a cellular phone are connected. In case of the latter terminal apparatus, a result of setting a destination and a route by the navigation apparatus is transmitted to the server apparatus SV via the above-described information terminal apparatus and the Internet IN and, at the same time, an insurance list transmitted from the server apparatus SV is received via the above-described information terminal apparatus and the Internet IN.

In addition, instead of the sensor unit 12, an apparatus not utilizing a GPS can be used. For example, if an information terminal apparatus such as a cellular phone is used as a communication apparatus, a position of the terminal apparatus T, that is, a position of a vehicle, or the like, may be determined based on a base station at the time when the information terminal apparatus carries out communication. In addition, present position detecting means utilizing a satellite such as GLONASS in addition to a GPS or utilizing other electric waves may be used.

### [Second embodiment]

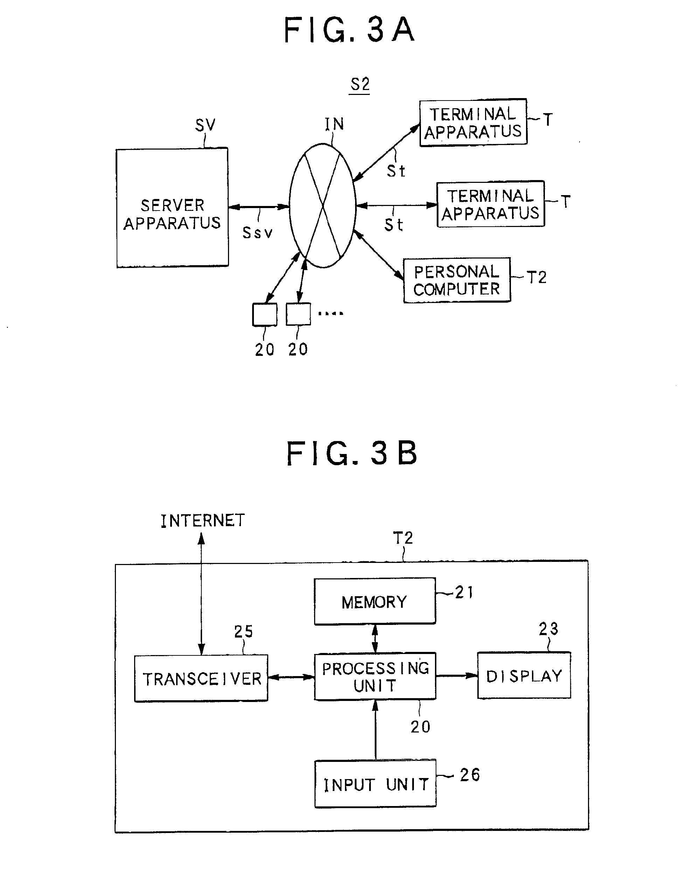

A second embodiment of the system for taking out an insurance policy of the present invention will be hereinafter described with reference to FIG. 3. In the second embodiment, an example in which a personal computer installed at one's home or the like is used as a second terminal apparatus is shown. In the following description, elements corresponding to the first embodiment are denoted by identical reference symbols and descriptions of the elements are appropriately omitted.

FIG. 3A is a block diagram showing an entire configuration of a navigation system constituting a system for taking out an insurance policy of the second embodiment. FIG. 3B is a block diagram showing a detailed configuration of a personal computer (second terminal apparatus).

As shown in FIG. 3A, in a system S2 of the second embodiment, a personal computer T2 is equivalent to the second terminal apparatus that is used in user's home or the like and is connected to the Internet IN. Respective personal computers T2 are associated with a predetermined terminal apparatus T by an ID or the like. Usually, the associated terminal apparatus T and personal computer T2 have a user in common.

As shown in FIG. 3B, the personal computer T2 is provide with: a processing unit 20 consisting of a CPU, a necessary memory or the like; a memory 21 for storing various data or the like required for calculating a route; a display unit 23 consisting of a display apparatus; a transceiver 25 having a function for communicating with the Internet IN; and an input unit 26 consisting of a keyboard or the like.

In the second embodiment, when a user inputs a destination or the like by the input unit 26, route calculation is executed in accordance with processing in the processing unit 20. The route calculation may be executed based only on data stored in the memory 21 or may be executed utilizing information obtained by communication with the server SV as well. A set destination and a calculated route are transmitted to the server apparatus SV via the Internet IN.

Upon receiving a destination and a route from the personal computer T2, the server apparatus SV retrieves insured contents or the like stored in the server 20 of an insurance company in the retrieval portion 1c and prepares an insurance list. Information such as weather and road conditions on a route can be obtained from each server 20 providing weather information, traffic information, event information or the like via the Internet IN. Next, the server apparatus SV transmits this insurance list to the personal computer T2 via the Internet IN.

The personal computer T2 displays the insurance list transmitted from the server apparatus SV on the display unit 23. The user can select a necessary insurance out of the displayed insurance list while looking at it and can designate selected insured contents or the like by an input operation with respect to the input unit 23. The selected insured contents or the like are transmitted to the server apparatus SV via the Internet IN.

The server apparatus SV thereafter carries out processing such as transmitting the insured contents or the like to an insurance company via the Internet IN and registering an insurance in the same manner as in the first embodiment.

In this way, in the second embodiment, a user can take out an insurance policy with a simple operation by operating the personal computer T2 while staying at the user's home or the like instead of operating the terminal apparatus T. Thus, it becomes possible for the user to take out an insurance policy with simple procedures from the user's home, for example, before leaving home to a destination.

In the second embodiment, although procedures themselves for taking out an insurance policy are carried out using the personal computer T2 (second terminal apparatus), other configuration and processing are substantially the same as those in the first embodiment. Further, in the second embodiment, the terminal apparatus T corresponds to the "first terminal apparatus".

### [Third embodiment]

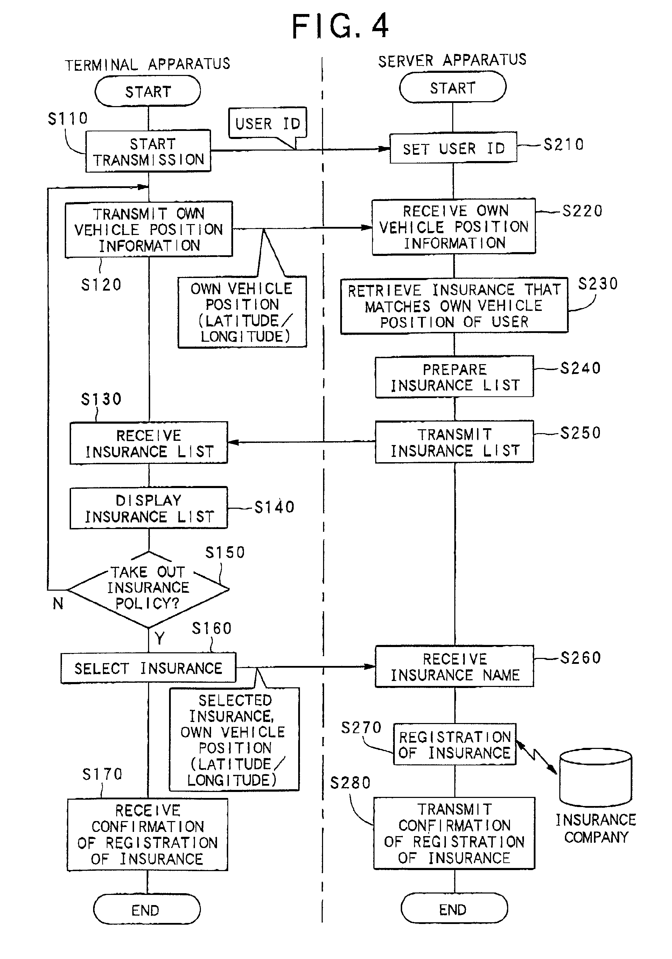

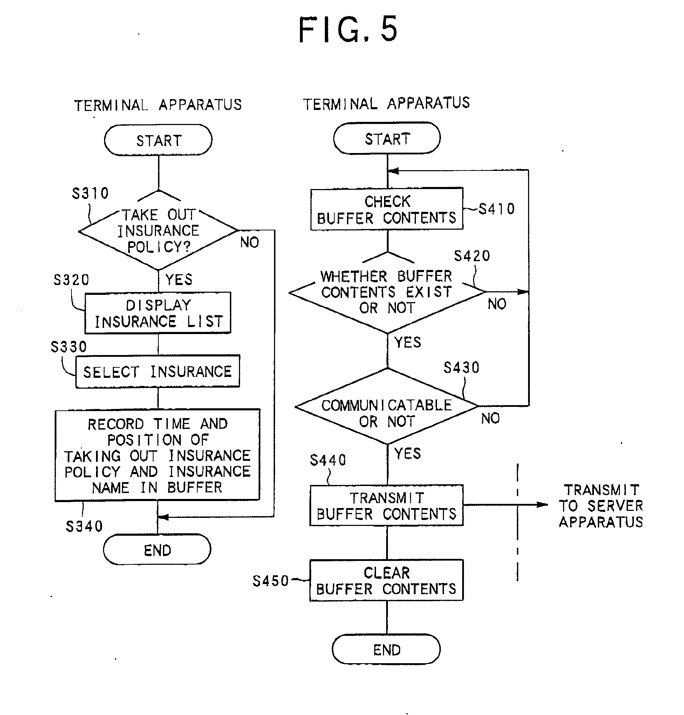

A third embodiment of the system for taking out an insurance policy of the present invention will be hereinafter described with reference to FIGS. 4 and 5, The third embodiment is an embodiment for proposing an appropriate insurance on the spot according to a change in conditions during driving or the like and making it possible for a driver to take out an insurance policy for the insurance. Therefore, elements shared with the system shown in FIG. 1 are denoted by identical reference symbols and descriptions of the elements are omitted.

FIG. 4 is a flow chart showing processing for taking out an insurance policy including a procedure for presenting an insurance list from a server apparatus. In FIG. 4, steps S110 to S170 show processing in the terminal apparatus T and steps S210 to S280 show processing in the server apparatus SV.

As shown in FIG. 4, the terminal apparatus T starts communication and transmits a user ID to the server apparatus SV (step S110). Next, a present vehicle position (latitude/longitude) obtained by a GPS is transmitted to the server apparatus SV (step S120).

The server apparatus SV sets the received user ID (step S210) and subsequently receives the above-described vehicle position (step S220). Next, the server apparatus SV retrieves insured contents or the like stored in the server 20 of an insurance company in the retrieval portion 1c and prepares an insurance list (steps S230 and S240). At this point, the server apparatus SV can obtain insured contents that the user of the terminal apparatus T would require by executing the retrieval on retrieval conditions according to the above-described vehicle position received from the terminal apparatus T. For example, if it is found that an automobile is running on a highway according to the received vehicle position, an insurance limited to highways can be extracted. In addition, if it is found that an automobile is running within a circuit, an insurance that is applied within a circuit can be extracted. In this way, it becomes possible to present appropriate insured contents or the like according to a situation in which an automobile runs. In addition, information such as weather, road conditions or the like on a route can be obtained from each server 20 that provides weather forecast, traffic information, event information or the like via the Internet IN. Insured contents extracted by retrieval and an insurance premium for each insured content can be set or corrected based on the information.

Next, in step S250, this insurance list is transmitted to the terminal apparatus T via the Internet IN.

Upon receiving the insurance list transmitted from the server apparatus SV (step S130), the terminal apparatus T displays the received insurance list on the display unit 2 (step S140). The insurance list includes insured contents, an insurance premium for each insured content or the like. Looking at the displayed insurance list, a user of the terminal apparatus T can indicate whether he/she has an intention to take out an insurance policy by the operation with respect to the input unit 3. In response to this operation, the terminal apparatus T proceeds to step S160 if the intention of taking out an insurance policy is affirmed or returns to step S120 if the intention is denied.

In case of taking out an insurance policy, the user of the terminal apparatus T can select a necessary insurance out of the displayed insurance list and can designate selected incurred contents or the like by an input operation with respect to the input unit 3. The terminal apparatus T discriminates the selected insured contents or the like based on an input operation with respect to the input unit 3 and transmits the selected insured contents or the like to the server apparatus SV via the Internet IN (step S160).

Upon receiving the insured contents or the like transmitted from the terminal apparatus T (step S260), the server apparatus SV transmits the insured contents or the like to an insurance company via the Internet IN to make the registration of an insurance and its confirmation and, at the same time, transmits a report or the like indicating that the insurance has been registered to the terminal apparatus T as a confirmation of the insurance via the Internet IN (steps S270 and S280). In step S170, the terminal apparatus T receives this confirmation of the insurance, and the processing in the terminal apparatus T and the server apparatus SV ends.

In this way, the user of the terminal apparatus T can take out an insurance polity with a simple operation while looking at the display of the terminal apparatus T in this embodiment. In addition, insured contents matching a present position (vehicle position) of the user of the terminal apparatus T can be presented to the user at good timing. Therefore, the user of the terminal apparatus T can be given an opportunity of taking out an insurance policy on the spot according to a sudden change in circumstances occurred to the user. For example, if the user of the terminal apparatus T changes a destination or a traveling route, the user can additionally take out an insurance policy for a small insurance. In addition, it becomes possible for the terminal apparatus T to present an appropriate insurance on the spot according to a change in road conditions such as the existence of an unpaved part on a route, occurrence of a landslide or a flood on a road, or the like, a change in weather such as heavy rain, heavy snow, hail, strong wind or the like and a change in circumstances such as the relief of a driver or the like, whereby the user can take out an insurance policy for the insurance. Thus, the user can take out an insurance policy for a small insurance or the like on a real time basis, which simplifies procedures. In addition, since a seller of an insurance can present an insurance of appropriate contents to a user at appropriate timing, sales of insurances can be promoted. Further, although the processing for the procedures for taking out an insurance policy is described in the above-described embodiment, similar processing can be executed for procedures for continuing an insurance and procedures for terminating an insurance via the terminal apparatus T.

FIG. 5 is a flow chart showing procedures for taking out an insurance policy in the case in which an insurance list is not presented from a server apparatus. Both of steps S310 to S340 and steps S410 to S450 show processing in the terminal apparatus T.

As shown in FIG. 5, the terminal apparatus T determines whether or not a user has an intention of taking out an insurance policy (step S310) and, if the determination is affirmative, the terminal apparatus T proceeds to step S320 or, if the determination is negative, the terminal apparatus T ends the processing. Further, this determination is carried out based on an input operation with respect to the input unit 3. In step S320, the terminal apparatus T displays a predetermined insurance list on the display unit 2. This insurance list may be a list showing all insured contents or the like for which the user can take out an insurance policy or may be a list showing insured contents or the like in a range designated by the user of the terminal apparatus T in advance.

In taking out an insurance policy, the user of the terminal apparatus T can select a necessary insurance out of the displayed insurance list and can designate selected insured contents or the like by an input operation with respect to the input unit 3. The terminal apparatus T discriminates the selected insured contents or the like based on an input operation with respect to the input unit 3 (step S330). Next, the terminal apparatus T stores a time of taking out an insurance policy (present time), a position of a vehicle (present position) and a name of an insurance for which an insurance policy is taken out (insured contents) in a part of a region of a memory 11 functioning as a buffer and ends a series of processing.

In this way, the user of the terminal apparatus T causes the terminal apparatus T to store an insurance for which the user wishes to take out an insurance policy in a buffer in the processing of steps S310 to S340. This processing can be executed at arbitrary timing.

On the other hand, in step S410, the terminal apparatus T reads in information of the buffer and determines whether or not a stored insurance exists by the processing of steps S310 to S340. If the determination is affirmative, the terminal apparatus proceeds to step S430 or, if the determination is negative, returns to step S410.

In step S430, the terminal apparatus T determines whether or not it is possible to carry out communication with the server apparatus SV via the Internet IN and, if the determination is affirmative, transmits an insurance stored in the buffer to the server apparatus SV (step S440). Next, the terminal apparatus clears information of the insurance stored in the buffer (step S450) and ends a series of processing. Further, although the server apparatus SV that has received an insurance for which the user should take out an insurance policy executes necessary procedures for registration of the insurance, or the like, descriptions of this processing are omitted.

In this way, in the processing of steps S410 to S450, if an insurance is stored in the buffer and it is possible to communicate with the server apparatus SV, the terminal apparatus T transmits the insurance stored in the buffer to the server apparatus SV. Therefore, in the processing shown in FIG. 3, the terminal apparatus T receives a user's selection of an insurance (procedures for taking out an insurance policy (steps S310 to S340) regardless of whether or not it is possible to communicate with the server apparatus SV and transmits the received insurance to the server apparatus SV when it becomes possible to communicate with the server apparatus SV (steps S410 to S450). Consequently, the user can take procedures for taking out an insurance with respect to the terminal apparatus T even if the user is in a position where it is impossible to communicate with the server apparatus SV.

Further, in general, as a characteristic of a navigation system, accurate positional information can be grasped in association with accurate time information. Thus, in this embodiment, by recording the information, it becomes possible to determine whether an insurance is allowed to be applied or not according to a relationship between a route retrieved by the navigation system and a route on which an automobile actually ran. For example, it becomes possible to apply an insurance by limiting it to an accident on a route retrieved by the navigation system. Utilizing such a characteristic, for example, setting of an insurance limited to the case in which an automobile runs within a circuit becomes possible. In addition, it is also possible to sell an insurance applied to an accident that has occurred in the case in which a car navigation system guided an automobile erroneously.

Moreover, if the navigation system is a system for recording a locus of an automobile, since a driver has feeling that his/her driving is watched, there also is an incidental advantage that the driver's consciousness for safe driving can be improved. In addition, if a driver is driving at a speed outside a coverage of an insurance, a voice guidance such as for urging the driver to drive carefully may be outputted from the terminal apparatus T.

### [Fourth embodiment]

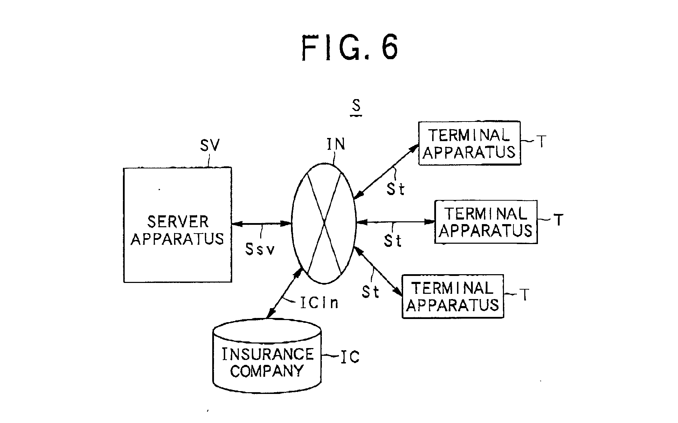

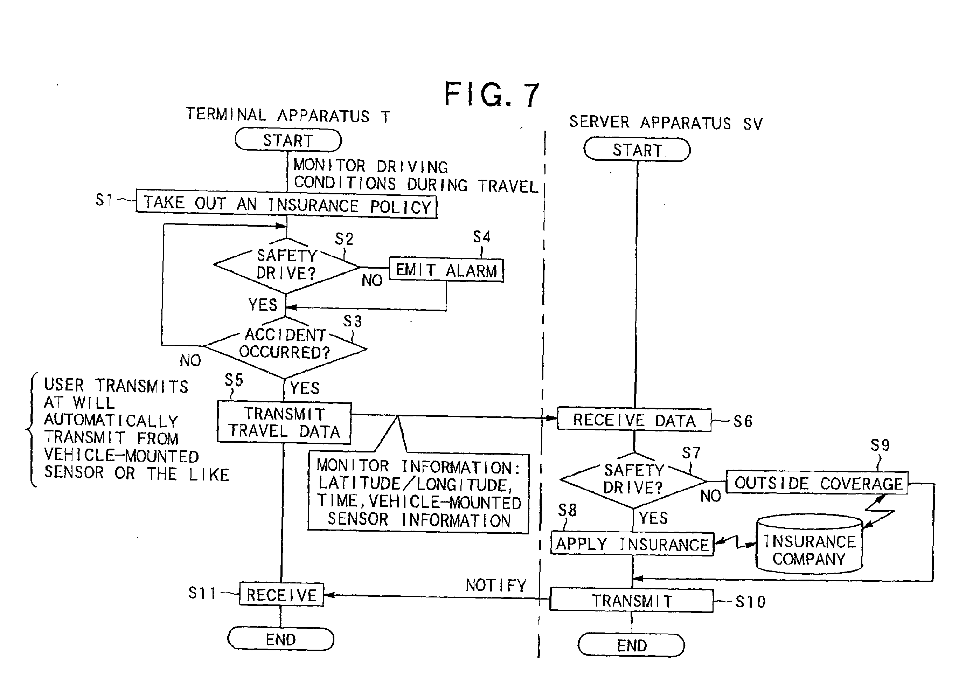

A fourth embodiment of the system for taking out an insurance of the present invention will be described with reference to FIGS. 6 and 7. The fourth embodiment applies the present invention to a system similar to the first embodiment shown in FIG. 1. However, as shown in FIG. 6, it is different from the first embodiment in that the system is configured to communicate with a server IC installed in an insurance company. In addition, in this embodiment, the system is different from the first embodiment in that it is determined whether or not an automobile was driven within a coverage of a safety drive insurance. Therefore, elements shared with the system shown in FIG. 1 are denoted by identical reference symbols and descriptions of the elements are omitted.

In addition, the external storage 4 of this embodiment shown in FIG. 6 accumulates and stores all kinds of information required for navigation processing, which is executed as the navigation system of the embodiment, such as map information that should be displayed on the terminal apparatus T, various kinds of information to be used for route processing described below, geographical point information required for executing navigation processing of the embodiment (more specifically, including positional information of a geographical point shown on a map displayed in the terminal apparatus T, contents information of the geographical point, or the like), and user information on a user who is using each terminal apparatus T, or the like. The external storage 4 outputs the information to the CPU 1 as a memory signal Sm at need.

Next, an example in which the system for taking out an insurance of this embodiment is applied to the above-mentioned navigation system S will be described.

The terminal apparatus T mounted on a vehicle as a mobile unit has the input unit 16 as input means as described above. A user performs an input operation for taking out an insurance policy for and registering in a safety drive insurance from this input unit 16. That is, the input unit 16 generates an input signal Icin for taking out an insurance policy for and registering in the safety drive insurance. Then, the input unit 16 transmits this input signal Icin to a server IC of an insurance company from the terminal apparatus T via the Internet IN as shown in FIG. 6. The server IC of the insurance company carries out a registration operation based on the input signal Icin.

In addition, the terminal apparatus T has the sensor unit 12 as travel data obtaining means as described above. The sensor unit 12 obtains travel data such as positional information (latitude and longitude) of a vehicle, time information, speed information by a vehicle speed sensor of a vehicle-mounted sensor and information of a travel history. Further, the vehicle-mounted sensor may include information by a seatbelt sensor or the like other than the above-described vehicle speed sensor.

Moreover, the terminal apparatus T has the processing unit 10 as driving condition determining means. The processing unit 10 receives travel data obtained in the sensor unit 12 and determines whether or not the user is driving within a coverage of the safety drive insurance. Here, whether or not the driving is within the coverage of the application is determined according to whether or not the travel (an own vehicle position and a travel locus) is within a travel speed and a travel route based on navigation information. The above-described travel route includes a requirement that the automobile traveled a route guided by the above-described navigation system.

In addition, the terminal apparatus T has the voice output unit 14 as alarming means. The voice output unit 14 carries out an alarming display by a voice guide or the like if the user did not drive safely (outside a coverage of an insurance).

On the other hand, the server apparatus SV has the external storage 4 as travel history storing means, which stores a history of the above-described travel data obtained by the terminal apparatus T. Here, the history of the travel data means a driving history of a user (travel time, travel distance, highways, passes, snow roads, alleys or the like), a vehicle position or the like as well as the number of times of taking out an insurance policy, the number of times of being applied an insurance, or the like.

FIG. 7 is a flow chart showing the system for taking out an insurance policy of this embodiment. As shown in FIG. 7, the terminal apparatus T monitors driving conditions during travel of a vehicle. In step S1, a user carries out an input for taking out an insurance policy for and registering in a safety drive insurance from the input unit 16 of the terminal apparatus T and, in step S2, the processing unit 10 of the terminal apparatus T determines whether or not the user is driving safely. If the user is driving safely (step S2; YES), the processing unit 10 proceeds to step S3. On the other hand, if the user is not driving safely (step S2; NO), the processing unit 10 emits an alarm such as "your driving is outside the coverage of the insurance" by a voice guidance or the like in step S4.

A criterion for determining safety drive is whether or not driving is within the coverage of the insurance. The driving within the coverage the insurance is determined according to whether or not the user is driving at a speed and on a route (own vehicle position and travel locus) based on navigation information.

Then, if an accident occurs in step S3, the terminal apparatus T transmits travel data to the server apparatus SV (step S5). In this case, as the travel data, the user arbitrarily transmits positional information of the automobile (latitude and longitude), time information, information of a vehicle-mounted sensor, information of a travel history or the like, or the vehicle-mounted sensor or the like automatically transmits the information. In addition, as to the travel data, latitude, longitude, time and vehicle-mounted sensor information are transmitted as monitor information.

On the other hand, the server apparatus SV receives the travel data transmitted from the terminal apparatus T (step S6) and determines whether or not the user was driving safely based on the history of the travel data (step S7).

Subsequently, if it is determined that the user was driving safely (step S7; YES), the safety drive insurance is applied in step S8 and the insurance company IC is informed to that effect. In addition, if it is determined that the user was not driving safely (step S7; NO), the driving is recognized as outside the coverage of the safety drive insurance in step S9 and the insurance company IC is informed to that effect. Then, the server apparatus SV notifies the terminal apparatus T whether or not the safety drive insurance has been applied (step S10). Moreover, the terminal apparatus T receives the information on whether or not the safety drive insurance has been applied transmitted from the server apparatus SV (step S11) and a series of flow ends.

Further, the terminal apparatus T carries out alarm and sales promotion for the safety drive insurance while monitoring the travel conditions of the user. More specifically, if the user has taken out an insurance policy for the safety drive insurance in advance at the time of setting a destination and is not driving safely (outside the coverage of the insurance), the terminal apparatus T emits an alarm of "your driving is outside the coverage of the insurance" on a real time basis as described above.

In addition, if a user, who has not taken out an insurance policy for the safety drive insurance, is driving safely (within the coverage of the insurance), the terminal apparatus T carries out sales promotion for soliciting the user to take out an insurance policy for the safety drive insurance. In this way, if the user takes out an insurance policy, he/she can do so on a real time basis. That is, it becomes possible for the user to take out an insurance policy of the safety drive insurance, continue the insurance or terminate the insurance on a real time basis in the same manner as a small insurance, for which the user can take out an insurance policy on the spot, by using the communication navigation system S.

Moreover, if the user, who has not taken out an insurance policy for the safety drive insurance, is not driving safely (outside the coverage of the insurance), the terminal apparatus T emits an alarm, for example, to the effect that "safety driving is recommended".

Incidentally, as a rate of an insurance in this embodiment, a low rate of the safety drive insurance is applied to an accident that has occurred when a user was driving within the coverage of the safety drive insurance.

In addition, in this embodiment, the history of the travel data obtained by the terminal apparatus T is stored and the rate of the safety drive insurance is changed based on the history of the travel data. For example, the rate of the insurance is changed according to a driving history of the user (travel time, travel distance, highways, passes, snow roads, alleys or the like), a vehicle position or the like as well as the number of times of taking out an insurance policy, the number of times of being applied an insurance, or the like. That is, the rate of the insurance is differentiated between a user who usually drives only on general roads and drives on a highway for the first time and a user who drives on a highway almost everyday.

In this way, according to the system for taking out an insurance policy in this embodiment, a user carries out an input for taking out an insurance for and registering in a safety drive insurance from the terminal apparatus T, and the terminal apparatus T receives travel data of a vehicle from the user and determines whether or not the user is driving within the coverage of the safety drive insurance. As a result, the user can take out an insurance policy for the safety drive insurance on a real time basis, which leads to safety drive of the user, using the communication navigation system S and, at the same time, the terminal apparatus T can grasp travel conditions of the user.

In addition, according to the server apparatus SV in this embodiment, the external storage 4 for receiving the travel data obtained by the terminal apparatus T and storing its history is provided and it is determined whether or not the user is driving within the coverage of the safety drive insurance based on the history of the travel data. As a result, travel conditions of the user can be always grasped.

Moreover, according to the server apparatus SV in this embodiment, a rate of the safety drive insurance is set based on the history of the travel data, whereby the rate of the insurance is changed according to the driving history of the user, an own car position, or the like as well as the number of times of taking out an insurance policy, the number of times of being applied an insurance, or the like. As a result, an insurance advantageous to the user can be provided.

According to the terminal apparatus T of this embodiment, the input unit 16 is provided with which the user carries out an input for taking out an insurance policy for and registering in the safety drive insurance. As a result, the user can take out an insurance policy for the safety drive insurance on a real time basis, which leads to safety drive of the user, using the communication navigation system S.

In addition, the terminal apparatus T of this embodiment has the sensor unit 12 for obtaining travel data of a vehicle and the processing unit 10 for determining whether or not the user is driving within the coverage of the safety drive insurance based on the travel data. As a result, the terminal apparatus T can always grasp travel conditions of the user.

Moreover, according to the terminal apparatus T of this embodiment, it is determined whether or not driving is within the coverage of the safety drive insurance according to whether or not the travel is within a travel speed and a travel route based on navigation information. As a result, an appropriate insurance can be set for an accident that has occurred when the user was driving safely.

Then, according to the terminal apparatus T of this embodiment, it is determined that the user was driving within the coverage of the safety drive insurance by the above-described driving conditions determining means, and a low rate of the safety drive insurance is applied to an accident that has occurred under the driving conditions. As a result, an insurance advantageous to the user can be provided.

In addition, according to the terminal apparatus T in this embodiment, if the user is driving outside the coverage of the safety drive insurance, an alarm is emitted to the user, thereby urging the user to drive safely.

Moreover, according to the terminal apparatus T in this embodiment, travel data of a vehicle is positional information of the vehicle, time information and speed information, whereby it can be easily determined whether or not driving is within the coverage of the insurance.

Further, the present invention is not limited to the above-described embodiment and various modifications can be made. For example, although the driving conditions determining means is provided in the terminal apparatus T, the present invention is not limited to this and the driving conditions determining means may be provided in the server apparatus SV, In this case, since the driving conditions can be grasped on a real time basis if the driving conditions are determined in the terminal apparatus T, it is desirable to provide the driving conditions determining means in the terminal apparatus T.

In addition, although an example is described in which the terminal apparatus T is applied to a vehicle as a mobile unit, it can be applied to a ship or the like other than this example. Moreover, although the Internet IN is used as communicating means, the present invention is not limited to this and a communication network using a dedicated line, a public line or the like may be used.

Further more, although a communication navigation terminal machine is used for the terminal apparatus T in the above-described embodiment, the terminal apparatus T may be a PDA, a cellular phone, a general purpose personal computer, various mobile terminals with a communication function, a household electric appliance with a communication function, or the like.

## Claims

1. A system for taking out an insurance policy using a communication navigation system (S) for carrying out navigation by utilizing map data accumulated in a map database site and present position data of a terminal apparatus (T) and transmitting the map data from a server apparatus (SV) to the terminal apparatus via a communication network (IN), **characterized in that**
the terminal apparatus comprises:
an information transmitting device (10) for transmitting information on a purpose of travel or a traveling state, which is set based on an instruction of a user, to the server apparatus via the communication network, and
the server apparatus comprises:
a storing device (4) for storing insured contents;
a list preparing device (1c) for retrieving the insured contents stored in the storing device to prepare an insurance list according to the information on a purpose of travel or a traveling state received from the terminal apparatus; and
a list transmitting device (1c) for transmitting the insurance list prepared by the list preparing device to the terminal apparatus via the communication network.

2. The system for taking out an insurance policy according to claim 1,
wherein the information transmitting device (10) transmits a destination or a route that is set based on an instruction of the user to the server apparatus via the communication network, and
the list preparing device (1c) retrieves the insured contents stored in the storing means to prepare an insurance list according to the destination or route received from the terminal apparatus.

3. The system for taking out an insurance policy according to claim 1,
wherein the information transmitting devices (10) transmits information on travel during the travel of a mobile unit to the server apparatus via the communication network, and
the list preparing device (1c) retrieves the insured contents stored in the storing device to prepare an insurance list according to the information on travel received from the terminal apparatus.

4. The system for taking out an insurance policy according to claim 3,
wherein the information on travel includes positional information of the mobile unit.

5. The system for taking out an insurance policy according to claim 1,
wherein the terminal apparatus (T) comprises:
a displaying device (2) for displaying the insurance list received from the server apparatus;
a receiving device (3) for receiving an instruction to select a predetermined insurance out of the insurance list displayed on the displaying device; and
an insurance transmitting device (10) for transmitting the insurance selected according to the instruction with respect to the receiving device to the server apparatus via the communication network.

6. The system for taking out an insurance policy according to claim 3,
wherein the terminal apparatus (T) comprises;
a receiving device (3) for receiving an application for taking out an insurance policy;
a storing device (11) for storing the insurance received by the receiving device and information on the receipt by the receiving device;
an insurance transmitting device (10) for transmitting the insurance stored in the storing device to the server apparatus together with the information on receipt by the receiving device when communication is possible.

7. The system for taking out an insurance policy according to claim 6,
wherein the information on receipt includes a position and time of the terminal apparatus at the time when the application for taking out an insurance policy is received.

8. The system for taking out an insurance policy according to claim 2,
wherein the terminal apparatus comprises a first terminal apparatus (T) that is provided in a mobile unit and receives the map data transmitted from the server apparatus (SV) via a communication network (IN) and a second terminal apparatus (T2) connected to the communication network, and
the second terminal (T2) apparatus comprises:
an inputting device (26) for receiving an input of a destination; and
an information transmitting device (20) for transmitting a destination received by the inputting device or a route to the destination to the server apparatus via the communication network, and
the server apparatus (SV) comprises:
a storing device (4) for storing insured contents;
a list preparing device (1c) for retrieving the insured contents stored in the storing device to prepare an insurance list according to the destination or the route received from the second terminal apparatus; and
a list transmitting device (1c) for transmitting the insurance list prepared by the list preparing device to the second terminal apparatus via the communication network.

9. The system for taking out an insurance policy according to claim 8,
wherein the second terminal apparatus (T2) comprises:
a displaying device (23) for displaying the insurance list received from the server apparatus;
a receiving device (26) for receiving an instruction for selecting a predetermined insurance out of the insurance list displayed on the displaying device; and
an insurance transmitting device (20) for transmitting a selected insurance according to an instruction with respect to the receiving device to the server apparatus via the communication network.

10. The system for taking out an insurance policy according to claim 1,
wherein the list preparing device (1c) prepares the insurance list with reference to information obtained via the communication network.

11. The system for taking out an insurance policy according to claim 10,
wherein the information is weather information or traffic information.

12. A system for taking out an insurance policy in a communication apparatus that comprises a server apparatus (SV) for transmitting navigation information via communicating means and a terminal apparatus (T) for receiving and accumulating the navigation information transmitted from the server apparatus via the communicating means and moving with a mobile unit and carries out navigation of the mobile unit in accordance with the navigation information, **characterized in that** the system comprises:
an inputting device (16) for carrying out an input for taking out an insurance policy and registering for a safety drive insurance from the terminal apparatus;
a travel data obtaining device (12) that is provided in the terminal apparatus and obtains travel data of the mobile unit; and
a driving conditions determining device (10) that is provided in at least one of the server apparatus and the terminal apparatus for receiving the travel data to determine whether or not a user is driving within a coverage of the safety drive insurance.

13. A method of taking out an insurance policy using a communication navigation system (S) that carries out navigation by utilizing map data accumulated in a map database site and present position data of a terminal apparatus (T) and transmitting the map data from a server apparatus (SV) to the terminal apparatus via a communication network (IN), **characterized in that** the method comprises the processes of:
transmitting information on a purpose of travel or a traveling state that is set based on an instruction of a user to the server apparatus (SV) by an information transmitting device (10) of the terminal apparatus (T) via the communication network (IN);
retrieving the insured contents stored in a storing device (4) of the server apparatus for storing insured contents and preparing an insurance list by a list preparing device (1c) of the server apparatus according to the received information on purpose of travel or traveling state; and
transmitting the insurance list prepared by the list preparing device (1c) to the terminal apparatus by a list transmitting device (1c) of the server apparatus via the communication network.

14. The method of taking out an insurance policy according to claim 13,
wherein the process of transmitting the information on purpose of travel or traveling state transmits a destination or a route that is set based on an instruction of the user, and
the process of preparing the insurance list prepares an insurance list according to the received destination or route.

15. The method of taking out an insurance policy according to claim 13,
wherein the process of transmitting the information on purpose of travel or traveling state transmits information on travel while the mobile unit is traveling, and
the process of preparing the insurance list prepares an insurance list according to the received information on travel.

16. The method of taking out an insurance policy according to claim 15,
wherein the information on travel includes positional information of the mobile unit.

17. The method of taking out an insurance policy according to claim 13, further comprising the processes of:
displaying the insurance list received from the server apparatus (SV) on a displaying device (2) of the terminal apparatus (T);
receiving an instruction to select a predetermined insurance out of the insurance list displayed on the displaying device by a receiving device (3) of the terminal apparatus; and
transmitting the insurance selected according to the instruction with respect to the receiving device to the server apparatus by an insurance transmitting device (10) of the terminal apparatus via the communication network.

18. The method of taking out an insurance policy according to claim 13,
wherein the process of preparing the insurance list prepares the insurance list with reference to the information obtained via the communication network.

19. The method of taking out an insurance policy according to claim 18,
wherein the obtained information is weather information or traffic information.

20. The method of taking out an insurance policy according to claim 15, further comprising the processes of:
receiving an application for taking out an insurance policy by a receiving device (3) of the terminal apparatus;
causing a storing device (11) to store the insurance received by the receiving device and information on the receipt by the receiving device; and
transmitting the insurance stored in the storing device to a server apparatus by an insurance transmitting device (10) of the terminal apparatus together with the information on the receipt by the receiving device when communication is possible.

21. The method of taking out an insurance policy according to claim 20,
wherein the information on the receipt includes a position and time of the terminal apparatus at the time when the application for taking out an insurance policy is received.

22. A server apparatus (SV) to be used in communication navigation system (S) for carrying out navigation by utilizing map data accumulated in a map database site and present position data of a terminal apparatus (T) and transmitting the map data from the server apparatus to the terminal apparatus via a communication network (IN), **characterized in that** the server comprises:
a storing device (4) for storing insured contents;
a list preparing device (1c) for retrieving the insured contents stored in the storing device to prepare an insurance list according to the purpose of travel or traveling state that is set based on an instruction of a user received from the terminal apparatus; and
a list transmitting device (1c) for transmitting the insurance list prepared by the list preparing device to the terminal apparatus via the communication network.

23. The server apparatus (SV) according to claim 22,
wherein the list preparing device (1c) prepares the insurance list according to a destination or a route that is set based on an instruction of the user received from the terminal apparatus.

24. The server apparatus (SV) according to claim 22,
wherein the server apparatus transmits the map data to a first terminal apparatus via a communication network, and
the list preparing device (1c) retrieves the insured contents stored in the storing device to prepare an insurance list according to a route to a destination that is set based on the instruction of the user received from a second terminal apparatus, and
the list transmitting device (1c) transmits the insurance list to the second terminal apparatus via the communication network.

25. The server apparatus (SV) according to claim 22,
wherein the list preparing device (1c) prepares the insurance list according to information on travel during travel of a mobile unit received from the terminal apparatus.

26. The server apparatus (SV) according to claim 25, further comprising:
an insurance receiving device for receiving an insurance for which an application for taking out an insurance policy is received by a receiving device (3) of the terminal apparatus (T) and information on the receipt.

27. A server apparatus (SV) to be used for a system for taking out an insurance policy in a communication navigation apparatus that transmits navigation information to a terminal apparatus (T) moving with a mobile unit via communicating means and carries out navigation of said mobile unit in accordance with this navigation information, **characterized in that** the server apparatus comprises:
a travel history storing device (4) for receiving travel data of the mobile unit received by the terminal apparatus to store its history; and
a driving conditions determining device for determining whether or not a user is driving within a coverage of a safety drive insurance based on the history of travel data.

28. The server apparatus (SV) according to claim 27, further comprising:
a setting device for setting a rate of the safety drive insurance based on the history of travel data.

29. A terminal apparatus (T) to be used in communication navigation system (S) for carrying out navigation by utilizing map data accumulated in a map database site and present position data of the terminal apparatus (T) and transmitting the map data from a server apparatus (SV) to the terminal apparatus via a communication network, **characterized in that** the terminal apparatus comprises:
an information transmitting device (10) for transmitting information on a purpose of travel or traveling state that is set based on an instruction of a user to the server apparatus (SV), which retrieves insured contents stored in a storing device (4) according to the information on purpose of travel or traveling state to prepare an insurance list and transmits the insurance list to the terminal apparatus via the communication network, via the communication network.

30. The terminal apparatus (T) according to claim 29,
wherein the information transmitting device (10) transmits a destination or a route that is set based on an instruction of the user, and
the server apparatus prepares an insurance list according to the received destination or route.

31. The terminal apparatus (T) according to claim 29,
wherein the information transmitting device (10) transmits information on travel during travel of a mobile unit, and
the server apparatus prepares an insurance list according to the received information on travel.

32. The terminal apparatus (T) according to claim 31, further comprising:
a receiving device (3) for receiving an application for taking out an insurance policy;
a storing device (11) for storing an insurance for which an application is received by the receiving device and information on the receipt by the receiving device; and
an insurance transmitting device (10) for transmitting the insurance stored in the storing device to a server apparatus together with the information on the receipt by the receiving device.

33. A terminal apparatus (T) to be used for a system for taking out an insurance policy in communication navigation that receives and accumulates navigation information transmitted from a server apparatus (SV) via communicating means and moving with a mobile unit to carry out navigation of a mobile unit in accordance with the navigation information, **characterized in that** the terminal apparatus comprises:
an inputting device (26) for taking out an insurance policy and registering for a safety drive insurance.

34. The terminal apparatus (T) according to claim 33, further comprising:
a travel data obtaining device (12) for obtaining travel data of the mobile unit; and
a driving conditions determining device (10) for determining whether or not the user is driving within a coverage of said safety drive insurance based on the travel data.

35. The terminal apparatus (T) according to claim 34,
wherein the driving conditions determining device (10) determines whether or not the user is driving within the coverage of the safety drive insurance according to whether or not the user travels within a travel speed and a travel route based on the navigation information.

36. The terminal apparatus (T) according to claim 34,
wherein it is determined by the driving conditions determining device (10) that the user is driving within a coverage of the safety drive insurance, and a low rate of the safety drive insurance is applied to an accident that occurs under the driving conditions.

37. The terminal apparatus (T) according to claim 35, further comprising an alarming device (14) for emitting an alarm to the user if the user is driving outside the coverage of said safety drive insurance.

38. The terminal apparatus (T) according to claim 34,
wherein travel data of the mobile unit is position information, time information and speed information of said mobile unit.
